# EUROPÄISCHE PATENTSCHRIFT

(11) **EP 1 316 870 B1**
(45) Veröffentlichungstag und Bekanntmachung des Hinweises auf die Patenterteilung: **23.12.2015**
(21) Anmeldenummer: 02023998.4
(22) Anmeldetag: 26.10.2002
(51) Int. Cl.: G05D 23/13

(54) **Stellvorrichtung für ein Mischventil**
Setting means for a mixing valve
Dispositif de réglage pour un mitigeur

(30) Priorität: 06.11.2001 DE 10153988
(43) Veröffentlichungstag der Anmeldung: 04.06.2003
(73) Patentinhaber: Grohe AG, 58675 Hemer (DE)
(72) Erfinder: Frankholz, Christian, 58730 Fröndenberg (DE)

(56) Entgegenhaltungen:
- EP-A- 1 107 085
- EP-A- 1 235 129
- DE-A- 2 427 807
- DE-A- 4 141 789
- GB-A- 1 460 983

## Beschreibung

Die Erfindung betrifft eine Sollwerteinstellvorrichtung an einem thermostatisch geregelten Mischventil für Kalt- und Heißwasser mit einer drehbar auf einem feststehenden Halsstück des Ventilgehäuses angeordneten, auf eine Ventilstange einwirkenden Stellmutter, auf der eine Griffhaube drehbar und zum Ventilgehäuse axial festliegend gehaltert ist.
Eine derartige Vorrichtung ist aus der DE 41 41 789 A1 bekannt. Hierbei ist es erforderlich, dass mit radial einsetzbaren Riegelelementen die Griffhaube axial von einem Anschlagring gehalten wird. Dabei sind die Riegelelemente jedoch sichtbar oder erfordern eine besondere, die Riegelelemente verdeckende Griffhülse.
Ferner ist aus der Druckschrift DE 35 30 812 A1 eine schlankbauende Stellvorrichtung für ein Mischventil bekannt, bei der jedoch die Griffhaube bei der Einstellbewegung axial ihre Position zum Ventilgehäuse ändert, was unerwünscht sein kann.

Der Erfindung liegt die Aufgabe zugrunde, die im Oberbegriff des Anspruchs 1 angegebene Sollwerteinstellvorrichtung zu verbessern.

Diese Aufgabe wird erfindungsgemäß bei einer gattungsgemäßen Sollwerteinstellvorrichtung dadurch gelöst, dass die Stellmutter axial festliegend auf dem Halsstück gehalten ist und die Ventilstange einen Teilbereich aufweist, der drehfest, aber axial verschiebbar in dem Halsstück geführt ist, wobei der Teilbereich mit einem Gewindekopf aus dem Halsstück axial vorsteht und in ein entsprechendes Gewinde in der Stellmutter eingreift.
Weitere Ausgestaltungen der Erfindung sind in den Ansprüchen 2 bis 10 angegeben.

Mit den erfindungsgemäßen Maßnahmen wird insbesondere erreicht, dass die Sollwerteinstellvorrichtung kompakter und schlanker gestaltet werden kann.

Ein Ausführungsbeispiel der Erfindung ist in der Zeichnung dargestellt und wird im Folgenden näher erläutert. Es zeigt in der Zeichnung
- Figur 1: eine Sollwerteinstellvorrichtung im Längsschnitt, angeordnet an einem zum Teil dargestellten thermostatisch geregelten Mischventil;

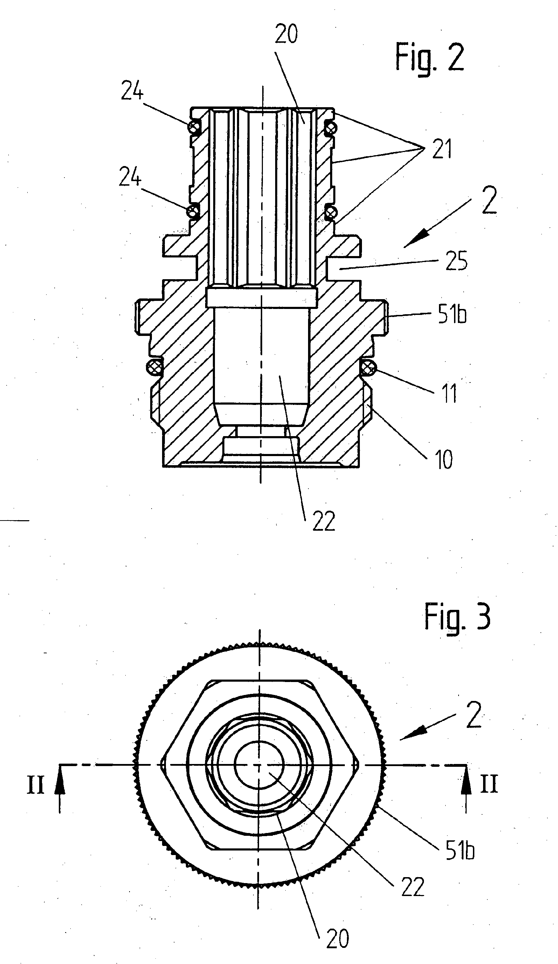

- Figur 2: das in Figur 1 gezeigte Halsstück in der Schnittebene II der Figur 3;
- Figur 3: das in Figur 2 gezeigte Halsstück in Draufsicht;
- Figur 4: die in Figur 1 gezeigte Stellmutter im Längsschnitt;
- Figur 5: die in Figur 1 gezeigte Hülse des Teilbereichs der Ventilstange im Längsschnitt;
- Figur 6: die in Figur 5 gezeigte Hülse in der Schnittebene VI;

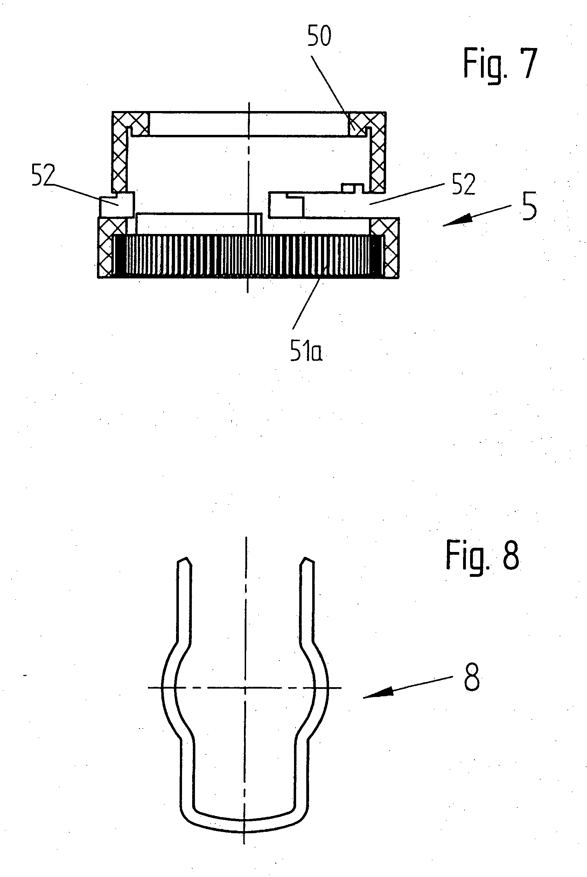

- Figur 7: den in Figur 1 gezeigten Anschlagring im Längsschnitt;
- Figur 8: die in Figur 1 gezeigte Riegelspange in Draufsicht.

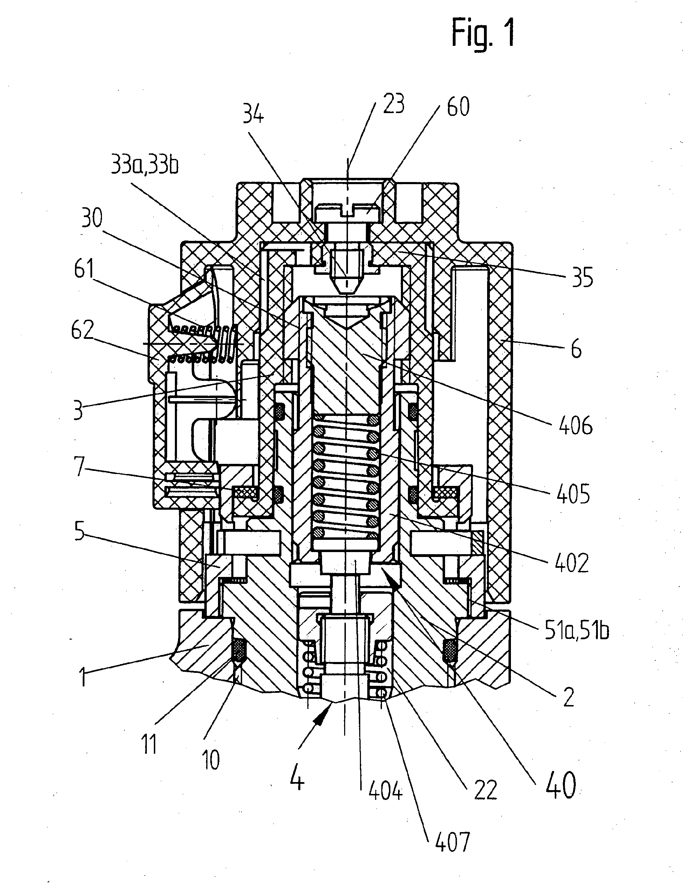

In Figur 1 der Zeichnung ist ein zum Teil dargestelltes Ventilgehäuse 1 mit einer Öffnung dargestellt, durch die ein als Baueinheit ausgebildetes bekanntes thermostatgeregeltes Mischventil in das Ventilgehäuse 1 einführbar ist. Nach dem Einsatz des Mischventils wird die Öffnung in dem Ventilgehäuse 1 von einem Halsstück 2 verschlossen. Das Halsstück 2 wird hierbei in ein Gewinde 10 des Ventilgehäuses 1 eingeschraubt, wobei in der Einschraubstellung der Innenraum des Ventilgehäuses 1 von einem O-Ring 11 nach außen abgedichtet ist.
Das Halsstück 2 weist eine auf einer Mittelachse 23 angeordnete Durchgangsbohrung 22 auf, in der eine Ventilstange 4 angeordnet ist, mit der die Stellgröße auf ein in der Zeichnung nicht dargestelltes Ventilglied übertragen wird. Die Ventilstange 4 wird von einer Rückstellfeder 407 in Richtung auf die Sollwerteinstellvorrichtung gedrückt.
Die Ventilstange 4 weist einen äußeren Teilbereich 40 auf, der über ein Gewinde 30 mit einer auf dem Halsstück 2 gelagerten Stellmutter 3 verbunden ist. Die Stellmutter 3 ist andererseits von einem axial festliegenden Anschlagring 5 drehbar, aber axial festliegend gehalten. Auf dem vorstehenden Endbereich der Stellmutter 3 ist eine Griffhaube 6 angeordnet, mit der zur Erzeugung der Stellgröße die Stellmutter 3 gedreht werden kann.

Der Teilbereich 40 der Ventilstange 4 weist eine Hülse 402 auf, wie es insbesondere aus Figur 1, 5 und 6 zu entnehmen ist, bei der an dem einen Endbereich der Gewindekopf 401 und an dem anderen Endbereich auf dem Außenmantel 403 ein Sechskant ausgebildet ist. In der Hülse 402 ist eine Überlastsicherung angeordnet, wobei ein Druckstück 404 mit Hilfe einer Axialschraube 406 und einer Schraubenfeder 405 gegen eine umlaufende Ringschulter in der Hülse 402 verspannt ist. Die Schraubenfeder 405 ist dabei stärker ausgelegt als die Rückstellfeder 407 des in der Zeichnung nicht dargestellten Ventilglieds, so dass die Schraubenfeder 405 erst bei einer bestimmten Schwergängigkeit oder einem Blockieren des Ventilglieds des thermostatgeregelten Mischventils mit Hilfe des Druckstücks 404 axial zusammengedrückt wird, so dass eine Überlastung oder Beschädigung des Ventilglieds vermieden wird.

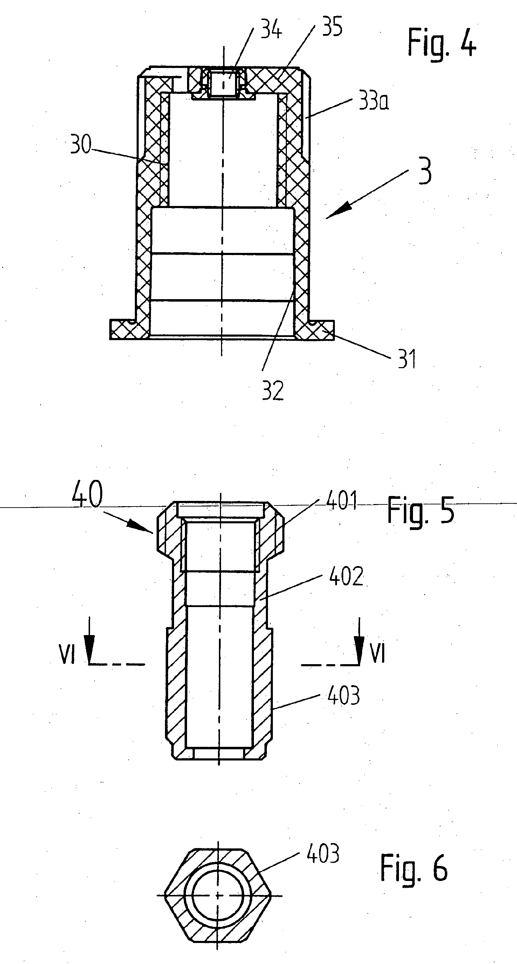

Der Anschlagring 5 ist als gestufte Hülse ausgebildet und weist im Inneren des erweiterten Teils eine Riefenverzahnung 51a auf, mit der er feingestuft in der jeweils gewünschten Drehstellung axial auf eine entsprechende Riefenverzahnung 51b des Halsstücks 2 aufsteckbar ist. In der axialen Stecklage kann der Anschlagring 5 durch eine radial einschiebbare Riegelspange 8 axial in der Stecklage gesichert werden. An der der Riefenverzahnung 51a gegenüberliegenden Stirnseite ist am Anschlagring 5 ein radial nach innen vorstehender Ringflansch 50 ausgebildet.
Die Stellmutter 3 ist becherförmig ausgebildet, wie es insbesondere aus Figur 4 der Zeichnung zu entnehmen ist. An dem einen Endbereich ist die Stellmutter 3 mit einem Boden 35 verschlossen und trägt im Zentrum des Bodens eine Gewindebohrung 34. Im Anschluss an den Boden 35 ist an der Innenseite das Gewinde 30 für den Gewindekopf 401 ausgebildet. Von der offenen Stirnseite aus ist außerdem in der Stellmutter 3 eine zylindrische Bohrung 32 eingebracht, die in der Stecklage mit einer zylindrischen Mantelfläche 21 des Halsstücks 2 ein Radiallager bildet. An der dem Boden 35 gegenüberliegenden Stirnseite ist ein radial vorstehender Außenflansch 31 eingeformt. Außerdem ist auf dem Außenmantel im Bereich des Bodens 35 eine Riefenverzahnung 33a ausgebildet, in die die Griffhaube 6 mit einer entsprechenden Riefenverzahnung 33b drehfest in der Stecklage einfasst.
Um das radiale Spiel der Stellmutter zu reduzieren und eine unbeabsichtigte selbsttätige Verstellung der Sollwerteinstellvorrichtung zu verhindern, sind auf der zylindrischen Mantelfläche 21 mit Abstand zueinander zwei Ringnuten eingelassen, in denen jeweils ein Reibring 24 aus gummielastischem Werkstoff angeordnet ist und in der Stecklage an der Wandung der Bohrung 32 reibend anliegt. Außerdem ist in dem Halsstück 2 eine Nut 25 ausgebildet, in die die Riegelspange 8 radial einschiebbar ist und die in der Stecklage den Anschlagring 5 axial sichert.
Die Griffhaube 6 ist drehfest über die Riefenverzahnung 33a, 33b mit der Stellmutter 3 verbunden. Zur Axialsicherung der Griffhaube 6 ist eine in die Gewindebohrung 34 eindrehbare Schraube 60 vorgesehen. Am Außenmantel der Griffhaube 6 ist ein vom Benutzer lösbarer Drehanschlag in Form einer, von einer Feder 61 in die Anschlagposition gedrückten Wippe 62 vorgesehen, die mit einem am Anschlagring 5 ausgebildeten - in der Zeichnung nicht dargestellten - Anschlag zusammenwirkt.
Der Außenflansch 31 der Stellmutter 3 und der Ringflansch 50 des Anschlagrings 5 bilden im zusammengefügten Zustand von Stellmutter 3 und Anschlagring 5 ein Axiallager. Damit eine verschleißarme lange Gebrauchsdauer mit etwa gleichbleibender Leichtgängigkeit gewährleistet ist, ist zwischen dem Außenflansch 31 und dem Ringflansch 50 ein Gleitring 7 angeordnet.

Die Sollwerteinstellvorrichtung kann in folgender Weise zusammenmontiert werden:
Zunächst wird die in der Zeichnung nicht dargestellte thermostatgeregelte Ventilbaueinheit mit dem Halsstück 2 in die Öffnung des Ventilgehäuses 1 eingeschoben und dicht eingeschraubt.
Sodann kann die Hülse 402 des Teilbereichs 40 der Ventilstange 2 mit dem Druckstück 404, der Schraubenfeder 405 und der Spannschraube 406 komplettiert und in die Axialführung 20 des Halsstücks 2 eingeschoben werden bis das Druckstück 404 an einem weiteren Teil der Ventilstange 4 anliegt.
Danach wird die Stellmutter 3 unter Zwischenlage des Gleitrings 7 bis zur Anlage an den Ringflansch 50 in den Anschlagring 5 eingeschoben. Anschließend werden zunächst die beiden Reibringe 24 in die beiden Nuten eingebracht werden, worauf dann die zusammengefügte Einheit von Stellmutter 3, Anschlagring 5 und Gleitring 7 von außen auf das Halsstück 2 so weit aufgeschoben wird, bis das Gewinde 30 am Gewindekopf 401 anliegt. Sodann wird der Gewindekopf 401 in das Gewinde 30 der Stellmutter 3 eingeschraubt und der Anschlagring 5 in der gewünschten Drehstellung auf die Riefenverzahnung 51b des Halsstücks 2 aufgeschoben. In der Stecklage wird dann zur Axialsicherung die Riegelspange 8 radial durch Fenster 52 des Anschlagrings 5 und durch die Nut 25 im Halsstück 2 eingebracht.
Hiernach kann mit der Stellmutter 3 das thermostatgeregelte Mischventil auf die Betriebsbedingungen justiert werden. Anschließend kann die Griffhaube 6 axial auf die Stellmutter 3 in der gewünschten Drehstellung auf die Riefenverzahnung 31a aufgeschoben und in der Stecklage durch Eindrehen der Schraube 60 gesichert werden, worauf die Sollwerteinstellvorrichtung am thermostatgeregelten Wassermischventil betriebsbereit ist.

## Patentansprüche

1. Sollwerteinstellvorrichtung an einem thermostatgeregelten Mischventil für Kalt- und Heißwasser
- mit einer drehbar auf einem feststehenden Halsstück (2) am Ventilgehäuse (1) angeordneten, auf eine Ventilstange (4) einwirkenden Stellmutter (3),
-- auf der eine Griffhaube (6) drehfest und
-- zum Ventilgehäuse (1) axial festliegend gehaltert ist,
- wobei die Stellmutter (3) axial festliegend auf dem Halsstück (2) gehalten ist
- und die Ventilstange (4) einen Teilbereich (40) aufweist,
-- der axial verschiebbar in dem Halsstück (2) geführt ist,
**dadurch gekennzeichnet, dass**
-- der Teilbereich (40) drehfest in dem Halsstück geführt ist,
-- mit einem Gewindekopf (401) aus dem Halsstück (2) axial vorsteht,
-- in ein entsprechendes Gewinde (30) in der Stellmutter (3) eingreift und
- die Stellmutter (3), an der offenen Stirnseite beginnend, eine zylindrische Bohrung (32) aufweist, die in der Einbaulage von einer entsprechenden zylindrischen Mantelfläche (21) des Halsstücks (2) aufgenommen ist.

2. Sollwerteinstellvorrichtung nach Anspruch 1, **dadurch gekennzeichnet, dass** der Teilbereich (40) der Ventilstange (4) als Überlastsicherung ausgebildet ist.

3. Sollwerteinstellvorrichtung nach Anspruch 1 oder 2, **dadurch gekennzeichnet, dass** am Halsstück (2) oder an dem Ventilgehäuse ein hülsenförmiger Anschlagring (5) drehfest und axial festliegend vorgesehen ist, dessen vorstehende Stirnseite einen nach innen vorstehenden Ringflansch (50) aufweist, und die Stellmutter (3) becherförmig ausgebildet und mit einem an der offenen Stirnseite angeformten ringförmigen Außenflansch (31) versehen ist, derart, dass der Ringflansch (50) mit dem Außenflansch (31) ein Axiallager für die von einer Rückstellfeder (407) axial nach außen gedrückten Stellmutter (3) bildet.

4. Sollwerteinstellvorrichtung nach Anspruch 3, **dadurch gekennzeichnet, dass** zwischen dem Ringflansch (50) und dem Außenflansch (31) ein Gleitring (7) angeordnet ist.

5. Sollwerteinstellvorrichtung nach Anspruch 3 oder 4, **dadurch gekennzeichnet, dass** der Anschlagring (5) durch eine Riefenverzahnung (51a, 51b) drehfest und durch eine Riegelspange (8) axial gesichert auf dem Halsstück (2) gehalten ist.

6. Sollwerteinstellvorrichtung nach wenigstens einem der vorhergehenden Ansprüche, **dadurch gekennzeichnet, dass** der Teilbereich (40) der Ventilstange (4) als Hülse (402) ausgebildet ist, wobei axial versetzt zum Gewindekopf (401) ein Außenmantel (403) im Querschnitt sechseckig geformt ist und in der Einbaulage von einer im Querschnitt entsprechend sechseckig ausgebildeten Axialführung (20) im Halsstück (2) aufgenommen ist.

7. Sollwerteinstellvorrichtung nach wenigstens einem der vorhergehenden Ansprüche, **dadurch gekennzeichnet, dass** die zylindrischen Mantelfläche (21) des Halsstücks (2) ein Radiallager für die Stellmutter (3) bildet.

8. Sollwerteinstellvorrichtung nach Anspruch 7, **dadurch gekennzeichnet, dass** auf der zylindrischen Mantelfläche (21) wenigstens ein Reibring (22) in einer Nut angeordnet ist, so dass eine unbeabsichtigte Verstellung der Vorrichtung ausgeschlossen ist.

9. Sollwerteinstellvorrichtung nach wenigstens einem der vorhergehenden Ansprüche, **dadurch gekennzeichnet, dass** auf der vom Außenflansch (31) abgekehrten Außenmantelfläche der Stellmutter (3) eine Riefenverzahnung (33a) vorgesehen ist, in die die Griffhaube (6) zur drehfesten Verbindung in der Stecklage mit einer entsprechenden Riefenverzahnung (33b) eingreift.

10. Sollwerteinstellvorrichtung nach wenigstens einem der vorhergehenden Ansprüche, **dadurch gekennzeichnet, dass** an der von dem Außenflansch (31) abgekehrten Stirnseite der Stellmutter (3) ein Boden (35) ausgebildet ist, in dessen Zentrum eine Gewindebohrung (34) zur Aufnahme einer Schraube (60) für die Befestigung der Griffhaube (6) mit der Stellmutter (3) vorgesehen ist.

11. Sollwerteinstellvorrichtung nach wenigstens einem der vorhergehenden Ansprüche, **dadurch gekennzeichnet, dass** an der Griffhaube (6) ein lösbarer Drehanschlag in Form einer von einer Feder (61) in die Anschlagposition gedrückten Wippe (62) vorgesehen ist, die mit einem am Anschlagring (5) ausgebildeten Anschlag zusammenwirkt.

## Claims

1. Desired-value setting apparatus on a thermostat-controlled mixing valve for cold and hot water
- having an adjusting nut (3) which is rotatably arranged on a neckpiece (2) in a fixed position on the valve housing (1) and which acts on a valve stem (4),
-- on which a gripping cap (6) is mounted in a manner preventing relative rotation and
- in a fixed axial position relative to the valve housing (1),
- the adjusting nut (3) being mounted on the neckpiece (2) in a fixed axial position,
- and the valve stem (4) having a sub-region (40)
-- which is guided so as to be axially displaceable in the neckpiece (2),
**characterised in that**
-- the sub-region (40) is guided in the neckpiece in a manner preventing relative rotation,
- projects out from the neckpiece (2) axially with a threaded head (401),
-- engages in a corresponding thread (30) in the adjusting nut (3) and
- the adjusting nut (3) has, starting at the open end face, cylindrical hole (32) which, in the assembled position, is occupied by a corresponding cylindrical envelope surface (21) of the neckpiece (2).

2. Desired-value setting according to claim 1, **characterised in that** the sub-region (40) of the valve stem (4) is constructed as an overload protection.

3. Desired-value setting apparatus according to claim 1 or 2, **characterised in that** on the neckpiece (2) or on the valve housing there is provided, in a manner preventing relative rotation and in a fixed axial position, a sleeve-shaped stop ring (5) the projecting end face of which has an inwardly projecting ring flange (50); and the adjusting nut (3) is of beaker-shaped construction and is provided with an annular external flange (31) formed on the open end face in such a way that the ring flange (50) together with the external flange (31) forms an axial bearing for the adjusting nut (3) pushed out axially by a returning spring (407).

4. Desired-value setting apparatus according to claim 3, **characterised in that** between the ring flange (50) and the external flange (31) there is arranged a slide ring (7).

5. Desired-value setting apparatus according to claim 3 or 4, **characterised in that** the stop ring (5) is held on the neckpiece (2) in a manner preventing relative rotation by means of a fluted toothed arrangement (51a, 51b) and in axially secured manner by means of a locking clip (8).

6. Desired-value setting appratus according to at least one of the preceding claims, **characterised in that** the sub-region (40) of the valve stem (4) is constructed in the form of a sleeve (402), wherein an outer surface (403) of hexagonal cross-section is formed axially offset from the threaded head (401) and is taken up, in the assembled position, by an axial guideway (20) constructed to be of corresponding hexagonal cross-section in the neckpiece (2).

7. Desired-value setting apparatus according to at least one of the preceding claims, characterised a that the cylindrical envelope surface (21) of the neckpiece (2) forms a radial bearing for the adjusting nut (3).

8. Desired-value setting apparatus according to claim 7, **characterised in that** on the cylindrical envelope surface (21) there is arranged at least one friction ring (22) in a groove so that unintentional movement of the apparatus is ruled out.

9. Desired-value setting apparatus according to at least one of the preceding claims, **characterised in that** on that outer envelope surface of the adjusting nut (3) which is remote from the external flange (31) there is provided a fluted toothed arrangement (33a) in which the gripping cap (6) engages by means of a corresponding fluted toothed arrangement (33b) to form in the inserted position a connection which prevents relative rotation.

10. Desired-value setting apparatus according to at least one of the preceding claims, **characterised in that** on that end face of the adjusting nut (3) which is remote from the external flange (31) there is constructed a base (35) in the centre of which there is provided a threaded hole (34) for talking a screw (60) for fixing the gripping cap (6) to the adjusting nut (3).

11. Desired-value setting apparatus according to at least one of the preceding claims, **characterised in that** on the gripping cap (6) there is provided a releasable rotation stop in the form of a rocker (62) which is urged by a spring (61) into the stop position and which co-operates with a stop formed on the stop ring (5).

## Revendications

1. Dispositif de réglage d'une valeur de consigne d'un mitigeur thermostatique pour de l'eau froide et de l'eau chaude comprenant :
- un écrou de réglage (3) monté à rotation sur le col (2) fixe du corps de mitigeur (1) et agissant sur une tige de soupape (4),
* portant solidairement en rotation un chapeau formant poignée (6), et
* tenue de manière fixe axialement par rapport au corps (1),
- l'écrou de réglage (3) étant tenu de manière fixe axialement sur le col (2),
- et la tige de soupape (4) a une zone partielle (40),
* qui est guidée de manière à coulisser axialement dans le col (2),
dispositif **caractérisé en ce que**
* la zone partielle (40) est guidée solidairement en rotation dans le col.
* elle a une tête filetée (401) qui dépasse axialement du col (2),
* pénètre dans le filetage correspondant (30) de l'écrou de réglage (3), et
- l'écrou de réglage (3) comporte un perçage cylindrique (32) commençant par le côté frontal ouvert, qui, en position de montage, est reçu par une surface enveloppe cylindrique (21) correspondante du col (2).

2. Dispositif de réglage d'une valeur de consigne selon la revendication 1,
**caractérisé en ce que**
la zone partielle (40) de la tige de soupape (4) est sous la forme d'une sécurité de surcharge.

3. Dispositif de réglage d'une valeur de consigne selon la revendication 1 ou 2,
**caractérisé en ce que**
le col (2) ou le corps de mitigeur comporte une bague de butée (5) en forme de manchon, solidaire en rotation et fixée axialement, dont la face frontale en saillie a une bride annulaire (50) venant en saillie de l'intérieur et l'écrou de réglage (3) est en forme de gobelet et a une bride extérieure (31), de forme annulaire ayant une face frontale ouverte de façon que la bride annulaire (50) forme avec la bride extérieure (31), un palier axial pour l'écrou de réglage (3) poussé axialement vers l'extérieur par un ressort de rappel (407).

4. Dispositif de réglage d'une valeur de consigne selon la revendication 3,
**caractérisé par**
une bague de glissement (7) entre la bride annulaire (50) et la bride extérieure (31).

5. Dispositif de réglage d'une valeur de consigne selon la revendication 3 ou 4,
**caractérisé en ce que**
la bague de butée (5) est fixée sur le col (2), solidairement en rotation par un moletage (51a, 51b) et elle est bloquée axialement par une pince de verrouillage (8).

6. Dispositif de réglage d'une valeur de consigne selon au moins l'une des revendications précédentes,
**caractérisé en ce que**
la zone partielle (40) de la tige de soupape (4) est en forme de manchon (402) et la tête filetée (401) décalée axialement a une enveloppe extérieure (403) de section hexagonale et en position de montage, elle est logée dans un guide axial (20) du col (2), qui a une section hexagonale correspondante.

7. Dispositif de réglage d'une valeur de consigne selon l'une quelconque des revendications précédentes,
**caractérisé en ce que**
la surface enveloppe cylindrique (21) du col (2) a un palier radial pour l'écrou de réglage (3).

8. Dispositif de réglage d'une valeur de consigne selon la revendication 7,
**caractérisé en ce que**
la surface enveloppe cylindrique (21) a au moins une bague de frottement (22) logée dans une rainure pour exclure tout déréglage non voulu du dispositif.

9. Dispositif de réglage d'une valeur de consigne selon l'une quelconque des revendications précédentes,
**caractérisé en ce que**
la surface enveloppe extérieure de l'écrou de réglage (3) à l'opposé de la bride extérieure (31), a un moletage (33a) dans lequel pénètre le chapeau formant poignée (6) pour une liaison solidaire en rotation en position engagée par un moletage (33b) correspondant.

10. Dispositif de réglage d'une valeur de consigne selon l'une quelconque des revendications précédentes,
**caractérisé en ce que**
la face frontale de l'écrou de réglage (3) à l'opposé de la bride extérieure (31) a un fond (35) dont le centre comporte un taraudage (34) recevant une vis (60) pour fixer la poignée chapeau (6) à l'écrou de réglage (3).

11. Dispositif de réglage d'une valeur de consigne selon l'une quelconque des revendications précédentes,
**caractérisé en ce que**
la poignée chapeau (6) comporte une butée de rotation amovible sous la forme d'un ressort (61) prévu dans la bascule (62) poussée en position de butée, et qui coopère avec une butée en forme de bague de butée (5).
